# EUROPÄISCHE PATENTANMELDUNG

(11) **EP 2 685 278 A1**
(43) Veröffentlichungstag der Anmeldung: **15.01.2014**
(21) Anmeldenummer: 12176239.7
(22) Anmeldetag: 12.07.2012
(51) Int. Cl.: G01S 17/02, G01S 7/481, G01B 11/02

(54) **Optischer Sensor**

(71) Anmelder: Baumer Electric AG, 8501 Frauenfeld (CH)
(72) Erfinder: Müller, Daniel, 8545 Rickenbach (CH); Glinz, Andreas, 8500 Frauenfeld (CH)
(74) Vertreter: Strauss, Steffen

(57) **Zusammenfassung**

Optischer Sensor zur Ermittlung einer Distanz zu einem Objekt, umfassend ein Lichtemissionselement zum Emittieren von Licht in Richtung eines Objektes, wenigstens drei Lichtempfangselementen und
ein Spiegelelement, das ausgebildet ist, das von dem Objekt zurückgeworfene Licht gleichzeitig auf eine Mehrzahl der wenigstens drei der Lichtempfangselemente zu richten, wobei jedes der wenigstens drei Lichtempfangselemente ausgebildet ist, ein Helligkeitssignal zu erzeugen, eine Auswertevorrichtung, die ausgebildet ist, aus den Helligkeitssignalen die korrespondierende Position des Objektes zu dem Optischen Sensor zu bestimmen.

## Beschreibung

Die vorliegende Erfindung betrifft das Gebiet der optischen Sensoren.

Optische Sensoren haben die Aufgabe, optische Informationen in elektrisch auswertbare Signale umzuwandeln. Zu diesem Zweck kann von optischen Sensoren sichtbares Licht, Infrarotlicht oder ultraviolettes Licht verwendet werden. Die Erfassung und Umwandlung der Lichtsignale in elektrische Signale erfolgt über elektronische Bauteile die quantenmechanische Effekte ausnutzen, wie beispielsweise Photodioden.

Die Druckschrift DE 41 254 79 A1 beschreibt einen Reflexionslichttaster mit Hintergrundunterdrückung, der ein Lichtempfangselement für den Vordergrundbereich und ein Lichtempfangselement für den Hintergrundbereich umfasst. Bei Annäherung eines Objekts an den Reflexionslichttaster wandert der Empfangslichtfleck vom Lichtempfangselement für den Hintergrundbereich zu dem Lichtempfangselement für den Vordergrundbereich, so dass dessen Signalamplitude größer wird. Die Signale der beiden Lichtempfangselemente werden verglichen und bei Erreichen eines bestimmten Schwellenwerts (Differenzwerts) wird der Ausgang des Reflexionslichttasters aktiviert. Befindet sich das Objekt jedoch so nahe an dem Reflexionslichttaster, dass der Empfangslichtfleck wegen des größeren Triangulationswinkels nicht mehr vollständig auf das Lichtempfangselement auftrifft, kann eine Anwesenheitserkennung eines Objekts nicht ohne weiteres durchgeführt werden. Man spricht dann vom Nahbereich des Reflexionslichttasters.

Es ist daher die Aufgabe der vorliegenden Erfindung, die optische Erfassung eines Objektes im Nahbereich zu ermöglichen.

Diese Aufgabe wird durch einen Gegenstand mit den Merkmalen nach dem unabhängigen Anspruch gelöst. Vorteilhafte Weiterbildungsformen sind Gegenstand der abhängigen Ansprüche, der Beschreibung und der Zeichnungen.

Gemäß einem ersten Aspekt der Erfindung wird diese Aufgabe durch einen optischen Sensor gelöst, mit einem Emissionselement zum Emittieren von Licht in Richtung eines Objektes, von wenigstens drei Lichtempfangselementen und einem Spiegelelement, das ausgebildet ist, das von dem Objekt zurückgeworfene Licht gleichzeitig auf eine Mehrzahl der wenigstens drei Lichtempfangselemente zu richten, wobei jedes der wenigstens drei Lichtempfangselementen ausgebildet ist, ein Helligkeitssignal zu erzeugen.

Dadurch wird beispielsweise der technische Vorteil erreicht, dass eine gleichzeitige Erkennung über mehrere Lichtempfangselemente die Genauigkeit einer Nahbereichserfassung verbessert und einen Erfassungsbereich vergrößert und eine genaue Bestimmung einzelner Helligkeitswerte erfolgt.

In einer weiteren vorteilhaften Ausführungsform umfasst der optische Sensor eine Auswertevorrichtung zum Auswerten der Helligkeitssignale welche ausgebildet ist, aus den Helligkeitssignalen eine Auftreffposition eines Lichtempfangsflecks zu bestimmen. Daraus sind die korrespondierende Position des Messobjektes und damit ein Vorliegen des Objektes in einem Vordergrundbereich bestimmbar.

Zusätzlich ist mit dem erfindungsgemässen Aufbau des optischen Sensors durch die Auswertevorrichtung ein Vorliegen des Objektes in einem Nahbereich bestimmbar.

In einer weiteren vorteilhaften Ausführungsform ist die Auswertevorrichtung ausgebildet, eine Helligkeitsverteilung anhand der Helligkeitssignale von den Lichtempfangselementen zu bestimmen. Dadurch wird beispielsweise der technische Vorteil erreicht, dass anhand der Helligkeitsverteilung beurteilt werden kann, ob sich das Objekt im Nahbereich oder in welchem Abstand innerhalb des Nahbereichs sich das Objekt befindet.

In einer weiteren vorteilhaften Ausführungsform formt die Mehrzahl der Lichtempfangselemente ein Empfangsfeld. Dadurch wird beispielsweise der technische Vorteil erreicht, dass ein einzelnes Bauteil für die Empfangselemente zum Herstellen des optischen Sensors verwendet werden kann.

In einer weiteren vorteilhaften Ausführungsform sind die Lichtempfangselemente der Mehrzahl der Lichtempfangselemente zeilenförmig angeordnet. Dadurch wird beispielsweise der technische Vorteil erreicht, dass das gesamte auf die Zeile auftreffende Licht zum Bestimmen eines Helligkeitswertes verwendet werden kann oder sich der Aufbau eines Empfangsfeldes vereinfacht.

In einer weiteren vorteilhaften Ausführungsform weist das Spiegelelement eine konkave Krümmung auf. Dadurch wird beispielsweise der technische Vorteil erreicht, dass sich eine Ausleuchtung der Lichtempfangselemente verbessert und ein Erfassungsbereich vergrößert werden kann. Zusätzlich kann durch die Verwendung einer gekrümmten Fläche der Arbeitsbereich des optischen Sensors deutlich vergrößert werden. Eine weitere Ausführungsform weist einen in die andere Dimension gekrümmten Spiegel auf, um die Aufweitung des Empfangslichts im Nahbereich zu korrigieren und das Licht wieder gebündelt auf das Empfängerelement zurückzuwerfen.

In einer weiteren vorteilhaften Ausführungsform ist das Spiegelelement in einer Richtung gekrümmt, die senkrecht zu dem Empfangsfeld ist. Dadurch wird beispielsweise der technische Vorteil erreicht, dass sich ein Erfassungsbereich des Sensors vergrößert.

In einer weiteren vorteilhaften Ausführungsform ist das Spiegelelement in einer Richtung gekrümmt ist, die parallel zu dem Empfangsfeld liegt. Dadurch wird beispielsweise der technische Vorteil erreicht, dass eine Lichtausbeute steigt und sich genauere Helligkeitswerte gewinnen lassen. Durch dieses gekrümmtes Spiegelelement kann die Aufweitung des Empfangslichts im Nahbereich korrigiert und das Licht gebündelt auf das Empfängerelement zurückgeworfen werden:
In einer weiteren vorteilhaften Ausführungsform ist das Spiegelelement in einer ersten Richtung und einer zweiten Richtung gekrümmt, die senkrecht zu der ersten Richtung ist.
Dadurch wird beispielsweise der technische Vorteil erreicht, dass sich sowohl der Erfassungsbereich als auch eine Lichtausbeute erhöhen.

In einer weiteren vorteilhaften Ausführungsform ist das Spiegelelement in einer Gehäusewand des optischen Sensors integriert. Dadurch wird beispielsweise der technische Vorteil erreicht, dass sich eine Herstellung vereinfacht und ein Materialaufwand reduziert wird.

In einer weiteren vorteilhaften Ausführungsform ist das Spiegelelement als polierte Fläche in ein Spritzteil eines optischen Tubus integriert. Dadurch wird beispielsweise der technische Vorteil erreicht, dass sich der Materialaufwand zur Herstellung des Spiegelelementes weiter verringert.

In einer weiteren vorteilhaften Ausführungsform ist das Empfangsfeld auf einem Halbleiterchip gebildet. Dadurch wird beispielsweise der technische Vorteil erreicht, dass sich ein besonders geeignetes Bauteil zur Herstellung des optischen Sensors verwenden lässt.

Gemäß einem zweiten Aspekt der Erfindung wird die Aufgabe durch ein Verfahren zum Betreiben eines optischen Sensors gelöst, mit den Schritten eines Emittierens von Licht in Richtung eines Objektes, eines gleichzeitigen Richtens des von dem Objekt zurückgeworfenen Lichtes auf eine Mehrzahl von Lichtempfangselementen mittels eines Spiegelelementes und eines Empfangens des durch das Spiegelelement gerichteten Lichtes durch die Mehrzahl der Empfängerelemente. Dadurch werden die gleichen technischen Vorteile wie durch den optischen Sensor nach dem ersten Aspekt erreicht.

In einer vorteilhaften Ausführungsform umfasst das Verfahren den Schritt eines Bestimmens einer Helligkeitsverteilung. Dadurch wird beispielsweise der technische Vorteil erreicht, dass anhand der Helligkeitsverteilung bestimmt werden kann, ob sich das Objekt im Nahbereich oder in welchem Abstand sich das Objekt befindet.

Ausführungsbeispiele der Erfindung sind in den Zeichnungen dargestellt und werden im Folgenden näher beschrieben.

Es zeigen:
- Fig. 1: eine schematische Ansicht eines optischen Sensors aus dem Stand der Technik mit einem Lichtempfangselement für den Vordergrundbereich und einem Lichtempfangselement für den Hintergrundbereich;
- Fig. 2: eine schematische Ansicht eines optischen Sensors aus dem Stand der Technik ohne Spiegelelement;
- Fig. 3: eine schematische Ansicht einer ersten Ausführungsform des erfindungsgemäßen optischen Sensors;
- Fig. 4: eine schematische Ansicht einer zweiten Ausführungsform des erfindungsgemäßen optischen Sensors;
- Fig. 5: eine Darstellung eines Strahlenganges und des Spiegelelementes; und
- Fig. 6: ein Blockdiagramm des erfindungsgemäßen Verfahrens.

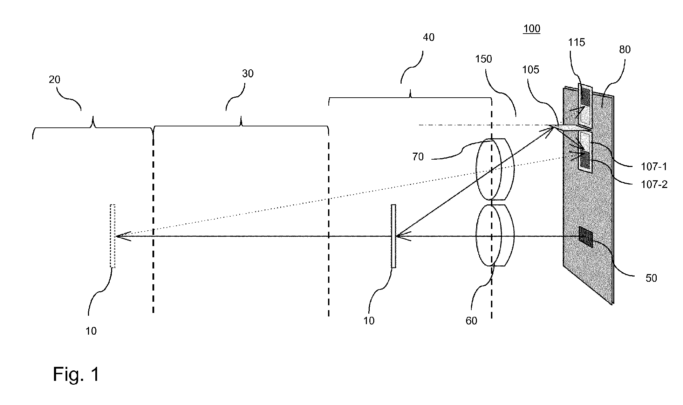

Fig. 1 zeigt eine schematische Ansicht eines optischen Sensors 100 aus dem Stand der Technik mit einem Lichtempfangselement 107-1 für den Vordergrundbereich 30 und einem Lichtempfangselement 107-2 für den Hintergrundbereich 20. Die Lichtempfangselemente 107-1 und 107-2 sind an einer Rückwand 80 des optischen Sensors 100 angeordnet.

Der optische Sensor 100 umfasst ein Lichtemissionselement 50, das Licht über eine Linse 60 in Pfeilrichtung zu einem Objekt 10 ausstrahlt. Das Objekt 10 wirft das auftreffende Licht zurück.

Befindet sich das Objekt 10 in dem Hintergrundbereich 20 des optischen Sensors 100 (gepunktet dargestellt), fällt das zurückgeworfene Licht durch eine Linse 70 auf das Lichtempfangselement 107-2. Das Lichtempfangselement 107-2 ist für eine Auswertung des Objektes 10 im Hintergrundbereich 20 vorgesehen. Dazu korrespondierend ist ein Lichtempfangselement 107-1 für eine Auswertung des Objektes 10 im Vordergrundbereich 30 vorgesehen. Befindet sich hingegen das Objekt 10 in dem Nahbereich 40 des optischen Sensors 100 (durchgezogen dargestellt), dann fällt das zurückgeworfene Licht durch die Linse 70 auf ein Spiegelelement 105. Von dem Spiegelelement 105 wird das Licht auf das Lichtempfangselement 107-1 für den Vordergrundbereich 30 reflektiert.

Je nachdem welches der Lichtempfangselemente 107-1 oder 107-2 das emittierte Licht empfängt, erkennt der optische Sensor 100, ob das Objekt 10 entweder in dem Hintergrundbereich 20 oder aber in dem Vordergrundbereich 30 bzw. Nahbereich 40 sich befindet. Eine Unterscheidung zwischen Vordergrundbereich 30 und Nahbereich 40 ist somit mit dem optischen Sensor 100 nicht möglich.

Ein in der Fig. 1 dargestelltes virtuelles Bild 115 entspricht keinen realen Lichtempfangselementen, sondern zeigt die Empfangselemente 107-1 und 107-2 aus Sicht des Objektes 10 in dem Nahbereich 40. In dieser Ausführung ist eine Erfassung des Objektes 10 in dem Nahbereich 40 nicht möglich.

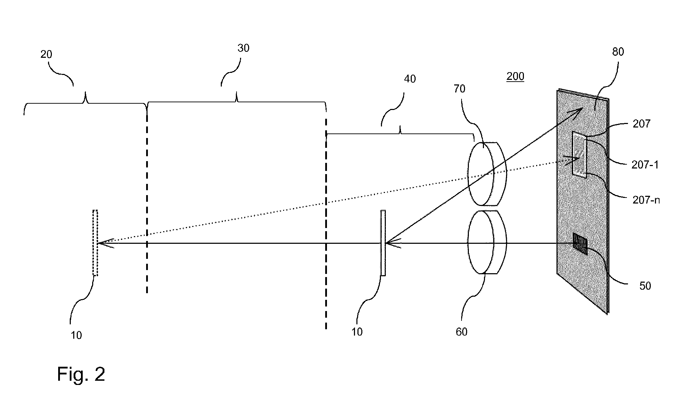

Fig. 2 zeigt eine weitere Ausführung eines optischen Sensors 200 aus dem Stand der Technik zur Bestimmung einer Objektdistanz. Der optische Sensor 200 umfasst ein Lichtemissionselement 50, das Licht über eine Linse 60 in Pfeilrichtung zu einem Objekt 10 ausstrahlt. Das Objekt 10 wirft das auftreffende Licht zurück. Das zurückgeworfene Licht fällt durch die Linse 70 auf ein Empfangsfeld 207 (Empfangsarray) mit mehreren Lichtempfangselementen 207-1 bis 207-n, das an der Rückwand 80 des optischen Sensors 200 angeordnet ist. Bei einer Bewegung des Objektes 10 wandert der Lichtpunkt auf dem Empfangsfeld 207 entlang. Anhand der Position des Lichtpunktes auf dem Empfangsfeld 207 kann daher die Entfernung des Objektes 10 zu dem Sensor 200 bestimmt werden. Befindet sich das durchgezogen gezeigte Objekt 10 so nah an dem optischen Sensor 200, dass das zurückgeworfene Licht nicht mehr auf das Empfangsfeld 207 trifft, wird dieser Bereich Nahbereich 40 genannt. Dadurch ist eine Distanzbestimmung des Objektes 10 nicht mehr möglich. Hierzu müsste das Empfangsfeld 207 vergrößert werden, was zu einem größeren technischen Aufwand und damit zu steigenden Kosten führen würde.

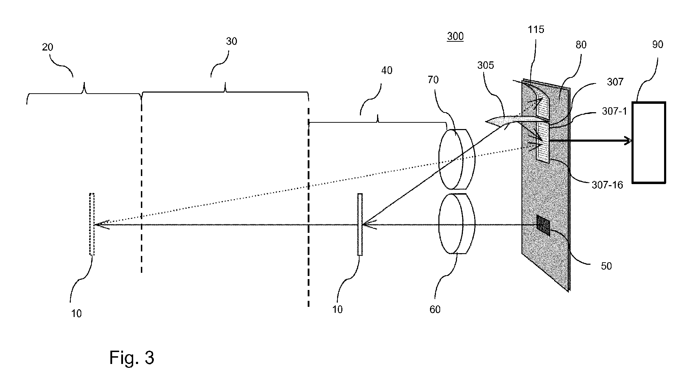

Fig. 3 zeigt eine Ausführungsform eines erfindungsgemässen optischen Sensors 300. Der optische Sensor 300 unterscheidet sich von dem in Fig. 2 gezeigten dadurch, dass dieser ein Spiegelelement 305 aufweist. In einer besonders bevorzugten Ausführung der Fig. 3 ist das freistehende Ende des Spiegelelementes 305 in Richtung des Empfangsfeldes 307 gebogen. Durch dieses Spiegelelement 305 wird von dem Objekt 10 zurückgeworfenes Licht auf eine Mehrzahl von sechzehn Lichtempfangselementen 307-1 ... 307-16 reflektiert. Hierbei werden ca. neun Lichtempfangselementen 307-2 ... 307-11 mit Licht beaufschlagt. Das virtuelle Bild 315 entspricht keinem realen Empfangsfeld 307, sondern zeigt das Empfangsfeld 307 aus Sicht des Objektes 10 im Nahbereich 40. Im Nahbereich 40 weitet sich der von der Linse 70 auf das Spiegelelement 305 gerichtete Lichtstrahl deutlich auf (nicht dargestellt), so dass eine Mehrzahl der Lichtempfangselementen 307-1 ... 307-16 mit Licht beaufschlagt werden. Der unterbrochen dargestellte Pfeil zeigt eine virtuelle Darstellung des Lichtweges auf die virtuelle Abbildung 315. Der durchgezogene Pfeil zeigt den tatsächlichen Lichtweg auf das Empfangsfeld 307.

Das Lichtemissionselement 50 wird beispielsweise durch eine Leuchtdiode oder eine Laserdiode gebildet. Das Lichtemissionselement 50 kann monochromatisches oder polychromatisches Licht mit gewünschten Frequenzen aussenden. Im Allgemeinen ist als Lichtemissionselement 50 jede Vorrichtung geeignet, die in der Lage ist, Licht in Richtung des Objektes 10 auszusenden.

Das radial ausgesandte Licht wird über die optische Linse 60 in parallele Lichtstrahlen verwandelt. Die Linse 60 ist ein optisches Bauelement mit zwei lichtbrechenden Flächen, die jeweils eine unterschiedliche Wölbung aufweisen können. Die Linse 60 wird beispielsweise durch eine bikonvexe, plankonvexe oder konkav-konvexe Sammellinse gebildet. Im Allgemeinen können jedoch auch andere geeignete Linsen verwendet werden.

Das Licht trifft auf das physische Objekt 10 auf, an dem es gestreut oder reflektiert wird. Das gestreute oder reflektierte Licht läuft durch die Linse 70, die wie die Linse 60 eine Sammellinse sein kann. Die Linse 70 fokussiert das zurückgeworfene Licht auf der Brennpunktebene, auf der sich die Rückwand 80 und das Empfangsfeld 307 mit den Lichtempfangselementen 307-1 bis 307-16 befinden.

Das Empfangsfeld 307 ist beispielsweise auf einem Halbleiterchip gebildet und umfasst eine Anzahl von mindestens drei Lichtempfangselementen. In dem dargestellten Beispiel sind es sechzehn Lichtempfangselemente 307-1 bis 307-16. Die Lichtempfangselemente 307-1 bis 307-16 können zeilenförmig oder matrixförmig ausgebildet sein. Bei den Lichtempfangselementen 307-1 bis 307-16 kann es sich beispielsweise um Photodioden handeln, die auf dem Halbleiterchip gebildet sind. Die Photodiode ist eine Halbleiter-Diode, die sichtbares Licht - in manchen Ausführungen auch IR-, UV- oder Röntgenstrahlen - an einem p-n-Übergang oder pin-Übergang durch den inneren Photoeffekt in einen elektrischen Strom umwandelt. In einer weiteren Ausführungsform kann das Empfangsfeld 307 durch einen CCD-Halbleiterchip (Charge-coupled Device) gebildet sein. Im Allgemeinen können jedoch auch andere Vorrichtungen verwendet werden, die geeignet sind, das auf die Rückwand auftreffende Licht zu erfassen.

Vorteilhaft ist es beispielsweise, ein Empfangsfeld 307 mit einer hohen Auflösung zu verwenden, da sich in diesem Fall genaue Aussagen über die Entfernung zwischen Objekt 10 und Sensor 300 gewinnen lassen. Das Empfangsfeld 307 kann beispielsweise eine Anzahl von 128 oder mehr Lichtempfangselementen 307-1 bis 307-16+n aufweisen. Jedes der Lichtempfangselemente 307-1 bis 307-16 liefert ein Signal, das die Beleuchtungsstärke (Helligkeit) an dem jeweiligen Lichtempfangselement wiedergibt.

Seitlich neben dem Empfangsfeld 307 ist ein Spiegelelement 305 angeordnet, das Licht, das von einem Objekt 10 im Nahbereich zurückgeworfen wird, auf das Empfangsfeld 307 reflektiert. Bei dem Spiegelelement 305 kann es sich beispielsweise um ein spiegelnd beschichtetes Kunststoffteil handeln. In einer weiteren Ausführungsform kann das Spiegelelement 305 in einer Gehäusewand des optischen Sensors 300 integriert sein. In einer besonders bevorzugten Ausführungsform ist das Spiegelelement 305 als polierte Fläche in ein Spritzteil eines optischen Tubus integriert. Beispielsweise wirft eine seitlich an einem Empfangstubus angeordnete, gekrümmte Spiegelfläche das Licht im Nahbereich 40 gleichmäßig verteilt auf die Lichtempfangselemente 307-1 bis 307-16 zurück. Das Spiegelelement 305 kann daher auch durch eine spezielle Tubusform gebildet werden. Durch das Spiegelelement 305 werden mehrere Lichtempfangselemente 307-2 und 307-11 gleichzeitig ausgeleuchtet.

Im Allgemeinen können als Spiegelelement 305 alle Elemente verwendet werden, die geeignet sind das Licht auf das Empfangsfeld 307 umzulenken.

Um den Erfassungsbereich zu erhöhen oder eine Lichtausbeute zu verbessern, kann die Spiegelfläche des Spiegelelementes 305 eine Krümmung aufweisen. Das Spiegelelement 305 kann beispielsweise eine konkave Krümmung aufweisen oder in einer Richtung gekrümmt sein, die senkrecht oder parallel zu dem Empfangsfeld 307 liegt. In einer weiteren Ausführungsform kann das Spiegelelement 305 auch in zwei unterschiedlichen Richtungen gekrümmt sein.

Über das Empfangsfeld 307 kann zum einen erfasst werden, ob ein scharfer Lichtfleck auf die Brennpunktebene trifft und an welcher Stelle der Lichtfleck auf die Brennpunktebene trifft, so dass hieraus eine Entfernung des Objektes 10 berechnet werden kann. Zum anderen kann bestimmt werden, ob auf der Brennpunktebene eine breite Helligkeitsverteilung vorliegt, so dass alleine aufgrund des Vorliegens einer breiten Helligkeitsverteilung festgestellt werden kann, dass sich das Objekt 10 sehr nahe an dem optischen Sensor 300 befindet. Falls bereits ein Empfängerfeld in dem optischen Sensor 300 vorhanden ist, benötigt das erfindungsgemäße Verfahren keine zusätzlichen Komponenten.

Durch das Empfangsfeld 307 mit den Lichtempfangselementen 307-1 bis 307-16 ist es somit möglich, dass diese gleichmäßige Lichtverteilung von derjenigen Lichtverteilung unterschieden werden kann, die im Normalbetrieb vorkommt. Bei der Lichtverteilung im Normalbetrieb handelt es sich beispielsweise um einen Lichtfleck, der auf das Empfangsfeld 307 trifft. Demgegenüber entsteht bei dem Vorliegen eines Objektes 10 im Nahbereich 40 eine breite Lichtverteilung. Die Erkennung einer breiten oder gleichmäßigen Verteilung kann daher zur Anwesenheitserkennung des Objektes 10 herangezogen werden.

Zu diesem Zweck werden die von den Lichtempfangselementen 307-1 bis 307-16 gelieferten Signale von einer Auswertevorrichtung 90 zum Auswerten der Helligkeitssignale verarbeitet. Bei dieser Auswertevorrichtung 90 kann es sich beispielsweise um einen Mikroprozessor handeln, der in der Lage ist, die von den Lichtempfangselementen 307-1 bis 307-16 gelieferten Signale zu verarbeiten.

Beispielsweise kann die Auswertevorrichtung 90 feststellen, ob und in welchem Bereich des Empfangsfeldes 307 die Helligkeitswerte über einem bestimmten Referenzwert liegen. Wird der Referenzwert in einem großen Bereich überschritten, so kann die Auswertevorrichtung 90 feststellen, dass sich das Objekt 10 im Nahbereich 40 des optischen Sensors 300 befindet.

In einer anderen Ausführungsform kann die Auswertevorrichtung 90 eine Breite, beispielsweise eine Halbwertsbreite und einen Mittelpunkt einer Helligkeitsverteilung ermitteln. Beispielsweise lassen sich diese Werte anhand einer Anpassung mit einer Fitfunktion ermitteln. Ab dem Erreichen einer bestimmten Breite kann von der Auswertevorrichtung 90 bestimmt werden, dass sich das Objekt 10 im Nachbereich 40 des Sensors 300 befindet. Anhand der Mitte der Verteilung kann zudem der Abstand des Objektes 10 im Nahbereich 40 berechnet werden.

Dadurch, dass durch das Empfangsfeld 307 eine hochauflösende Auswertung durchgeführt werden kann, kann die reflektierende Fläche beliebig vergrößert werden, während der Nahbereich 40 einwandfrei erkannt werden kann.

In einer anderen Ausführungsform kann die Auswertevorrichtung 90 durch eine geeignete Schaltung gebildet sein. Im Allgemeinen können als Auswertevorrichtung 90 alle Vorrichtungen verwendet werden, die geeignet sind, die von den Lichtempfangselementen 307-1 bis 307-n gelieferten Signale zu verarbeiten.

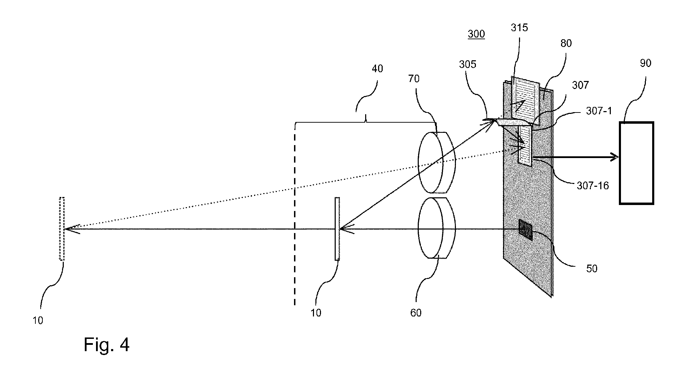

Fig. 4 zeigte eine weitere Ausführungsform des erfindungsgemäßen Sensors 300, bei der das Spiegelelement 305 derart gekrümmt ist, dass eine Aufweitung des Empfangslichts im Nahbereich 40 korrigiert wird und das Licht gebündelt auf das Empfängerelement 307 zurückgeworfen wird. In diesem Fall wirkt das Spiegelelement 305 als ein Hohlspiegel. Alle anderen mit Bezugszeichen versehenen Merkmale entsprechen denjenigen, die in Verbindung mit Fig. 3 beschrieben worden sind.

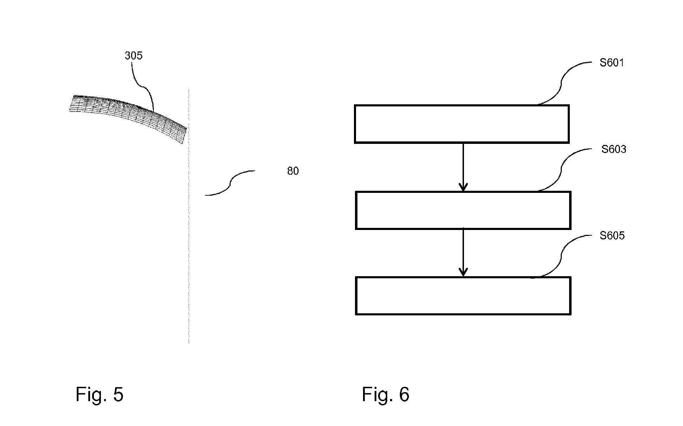

Fig. 5 zeigt eine schematische Darstellung des Spiegelelementes 305 des erfindungsgemässen Sensors 300. Das Spiegelelement 305 ist als eine in zwei Dimensionen gekrümmte Fläche, die als polierte Fläche direkt ins Spritzteil des optischen Tubus integriert sein kann ausgeführt.

Fig. 6 zeigt ein Blockdiagramm des erfindungsgemäßen Verfahrens. In einem ersten Schritt S601 wird Licht in Richtung des Objektes 10 emittiert. In einem zweiten Schritt S603 wird das von dem Objekt 10 zurückgeworfene Licht auf eine Mehrzahl 307-2 ... 307-11 von Lichtempfangselementen 307-1, ..., 307-16 mittels eines Spiegelelementes 305 gleichzeitig gerichtet. In einem dritten Schritt S605 wird das durch das Spiegelelement 305 gerichtete Licht durch die Mehrzahl 307-2 ... 307-11 der Empfängerelemente 307-1, ..., 307-16 empfangen.

Die vorliegende Erfindung ermöglicht, dass der Erkennungsbereich der Lösung deutlich vergrößert wird. Alle in Verbindung mit einzelnen Ausführungsformen der Erfindung erläuterten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder die in den Figuren gezeigten Merkmale nicht beschränkt.

## Patentansprüche

1. Optischer Sensor (300) zur Ermittlung einer Distanz zu einem Objekt (10), umfassend
ein Lichtemissionselement (50) zum Emittieren von Licht in Richtung des Objektes (10), wenigstens drei Lichtempfangselemente (307-1, ..., 307-16) und
ein Spiegelelement (305), das ausgebildet ist, das von dem Objekt (10) zurückgeworfene Licht gleichzeitig auf eine Mehrzahl der wenigstens drei der Lichtempfangselemente (307-1, ..., 307-16) zu richten,
wobei jedes der wenigstens drei Lichtempfangselementen (307-1, ..., 307-16) ausgebildet ist, ein Helligkeitssignal zu erzeugen sowie eine Auswertevorrichtung (90), die ausgebildet ist, aus den Helligkeitssignalen die korrespondierende Position des Objektes (10) zu dem Optischen Sensor (300) zu bestimmen.

2. Optischer Sensor (300) nach Anspruch 1, wobei die Auswertevorrichtung (90) ausgebildet ist, aus den Helligkeitssignalen eine Auftreffposition eines Lichtempfangsflecks auf den wenigstens drei der Lichtempfangselemente (307-1, ..., 307-16) zu bestimmen, um vorzugsweise ein Vorliegen des Objektes (10) in einem Vordergrundbereich (30) zu bestimmen.

3. Optischer Sensor (300) nach Anspruch 1, wobei die Auswertevorrichtung (90) ausgebildet ist, aus den Helligkeitssignalen der Mehrzahl der wenigstens drei der Lichtempfangselemente (307-1, ..., 307-16) ein Vorliegen des Objektes (10) in einem Nahbereich (40) zu bestimmen.

4. Optischer Sensor (300) nach einem der vorhergehenden Ansprüche, wobei die Auswertevorrichtung ausgebildet ist, eine Helligkeitsverteilung anhand der Helligkeitssignale von den Lichtempfangselementen (307-1, ..., 307-16) zu bestimmen.

5. Optischer Sensor (300) nach einem der vorangehenden Ansprüche, wobei die Lichtempfangselemente (307-1, ..., 307-16) ein Empfangsfeld (307) formen.

6. Optischer Sensor (300) nach einem der vorangehenden Ansprüche, wobei die Lichtempfangselemente (307-1, ..., 307-16) zeilenförmig angeordnet sind.

7. Optischer Sensor (300) nach einem der vorangehenden Ansprüche, wobei das Spiegelelement (305) eine konkave Krümmung aufweist.

8. Optischer Sensor (300) nach einem der vorangehenden Ansprüche, wobei das Spiegelelement (305) in einer Richtung gekrümmt ist, die senkrecht zu dem Empfangsfeld (307) liegt.

9. Optischer Sensor (300) nach einem der vorangehenden Ansprüche, wobei das Spiegelelement (305) in einer Richtung gekrümmt ist, die parallel zu dem Empfangsfeld (307) liegt.

10. Optischer Sensor (300) nach einem der vorangehenden Ansprüche, wobei das Spiegelelement (305) in einer ersten Richtung und einer zweiten Richtung gekrümmt ist, die senkrecht zu der ersten Richtung liegt.

11. Optischer Sensor (300) nach einem der vorangehenden Ansprüche, wobei das Spiegelelement (305) in einer Gehäusewand des optischen Sensors (300) integriert ist.

12. Optischer Sensor (300) nach einem der vorangehenden Ansprüche, wobei das Spiegelelement (305) als polierte Fläche in ein Spritzteil eines optischen Tubus integriert ist.

13. Verfahren zum Betreiben eines optischen Sensors (300), mit den Schritten:
- Emittieren (S601) von Licht in Richtung eines Objektes (10);
- gleichzeitiges Richten (S603) des von dem Objekt (10) zurückgeworfenen Lichtes auf wenigstens drei Lichtempfangselementen (307-1, ..., 307-16) mittels eines Spiegelelementes (305); und
- Empfangen (S605) des durch das Spiegelelement (305) gerichteten Lichtes durch eine Mehrzahl der Empfängerelemente (307-1, ..., 307-16).

14. Verfahren nach Anspruch 13, weiter mit dem Schritt eines Bestimmens einer Helligkeitsverteilung.
